# EUROPÄISCHE PATENTANMELDUNG

(11) **EP 1 291 547 A2**
(43) Veröffentlichungstag der Anmeldung: **12.03.2003**
(21) Anmeldenummer: 02017500.6
(22) Anmeldetag: 06.08.2002
(51) Int. Cl.: F16F 9/36

(54) **Dichtung**

(30) Priorität: 05.09.2001 DE 10143469
(71) Anmelder: ThyssenKrupp Bilstein GmbH, 58256 Ennepetal (DE)
(72) Erfinder: Adrian, Adolf, 58256 Ennepetal (DE); Nevoigt, Andreas, Dr., 58135 Hagen (DE)

(57) **Zusammenfassung**

Um eine Dichtung zum hydraulischen Abdichten einer axial oszillierend in einen Behälter, vorzugsweise einen hydraulischen Stoßdämpfer, eintauchenden Kolbenstange mit einem, vorzugsweise aus elastischem Kunststoff bestehenden Dichtelement (5), das mit einer oder mehreren an der Kolbenstange anliegenden Dichtkanten (10, 11, 12) ausgebildet ist, über einen Elastomerkörper (8) verspannt wird und mit Letzterem in einem Dichtungsträger (2) radial und axial gehalten wird, bei der das Dichtelement (5) einen L-förmigen Querschnitt mit einem ringförmigen Schenkel (7) und einem mantelförmig die Kolbenstange umgebenden Schenkel (6) aufweist und bei der der ringförmig ausgebildete Elastomerkörper (8) den die Kolbenstange umgebenden Schenkel (6) des Dichtelements (5) über eine sich konisch zum Innenraum des Behälters verjüngende Anlagefläche (9) radial abstützt und bei der der äußere Mantel des Elastomerkörpers (8) unter radialer Vorspannung in einer Ausnehmung (13) des Dichtungsträgers (2) liegt, derartig zu verbessern, dass bei niedrigen Temperaturen eine ausreichende Dichtigkeit gegen Austritt von Öl erzielt wird und bei hohen Temperaturen die Anpressung des Dichtelements (5) möglichst gering ist, ist die radiale Vorspannung über die axiale Höhe (16) des Elastomerkörpers (8) unterschiedlich.

## Beschreibung

Die Erfindung betrifft eine Dichtung nach dem Oberbegriff des Anspruchs 1. Derartige Dichtungen werden vorzugsweise zum Abdichten des herausgeführten Endes einer oszillierenden Kolbenstange bei hydraulischen Stoßdämpfern eingesetzt, wobei eine gute Abdichtung des unter Hochdruck stehenden Hydraulikmediums bei geringer Reibung zwischen Kolbenstange und Dichtung erzielt werden soll.

Die DE 82 01 327 U1 zeigt eine gattungsgemäße Dichtung. Nachteilig bei dieser Dichtung ergibt sich, dass eine Abdichtung bei tiefen Temperaturen nur erreichbar ist, wenn das durch einen Elastomerkörper gestützte Dichtelement bei höheren Temperaturen mit einer hohen Anpresskraft unterstützt wird. Dieses führt nachteilig zu größerem Verschleiß und einer größeren Schwergängigkeit der Kolbenstange.

Der Erfindung liegt die Aufgabe zugrunde, eine gattungsgemäße Dichtung derartig zu verbessern, dass bei niedrigen Temperaturen eine ausreichende Dichtigkeit gegen Austritt von Öl erzielt wird und bei hohen Temperaturen die Anpressung des Dichtelements möglichst gering ist.

Diese Aufgabe wird erfindungsgemäß durch die Merkmale des Anspruchs 1 gelöst. Vorteilhafte Aus- und Weiterbildungen sind in den Ansprüchen 2 bis 4 beschrieben.

Die mit der Erfindung erzielten Vorteile bestehen insbesondere darin, dass durch die besondere Ausbildung des Elastomerkörpers eine temperaturabhängig vorteilhafte Anpressung des Dichtelements gegen die Kolbenstange erzielt wird.

Ein Ausführungsbeispiel der Erfindung ist in der Zeichnung dargestellt und wird im Folgenden näher beschrieben. Es zeigen
- Fig. 1: einen Schnitt durch den Austrittsbereich der Kolbenstange aus dem Stoßdämpferzylinder und
- Fig. 2: eine vergrößerte Darstellung des Elastomerkörpers vor dem Einbau in die Dichtung.

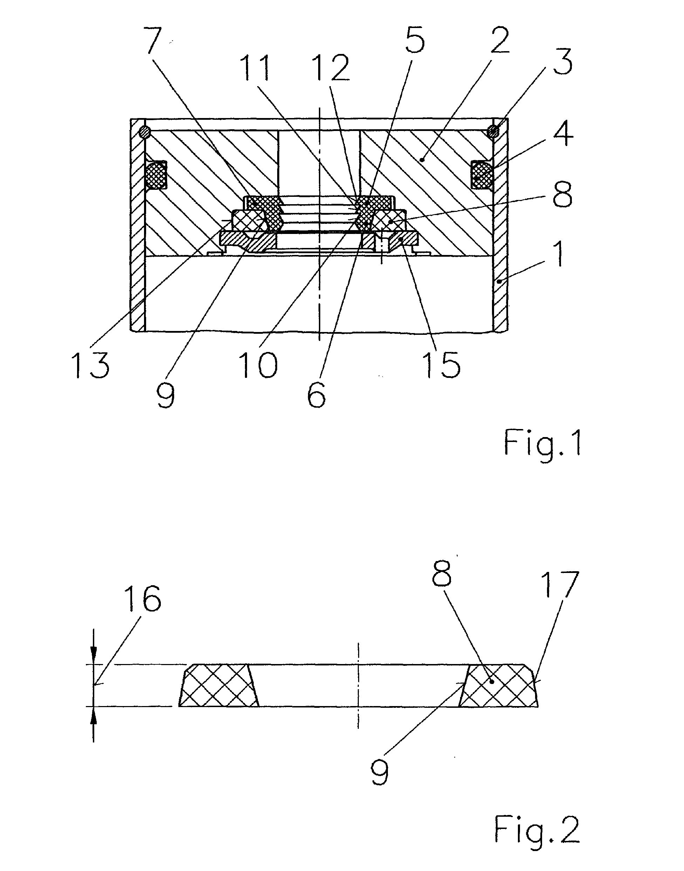

Im Ausführungsbeispiel wird die Dichtung zum Abdichten einer sich oszillierend bewegenden Kolbenstange beim Eintritt in das offene Ende eines Zylinders 1 eines hydraulischen Schwingungsdämpfers beschrieben. Fig. 1 zeigt einen vergrößerten Ausschnitt dieses Bereichs. Am offenen Ende des Zylinders 1 ist ein Dichtungsträger 2 über einen Sprengring 3 befestigt. Eine Dichtung 4 dient zum Abdichten des Dichtungsträgers 2 gegen den Zylinder 1.

Die Dichtung zum Abdichten der nicht dargestellten Kolbenstange gegenüber dem Dichtungsträger 2 besteht zum einen aus einem im Querschnitt L-förmigen Dichtelement 5 mit einem die Kolbenstange mantelförmig umgebenden Schenkel 6 und einem sich ringförmig an diesen anschließenden radialen Schenkel 7. Ein scheibenartig ausgebildeter Elastomerkörper 8 stützt den mantelförmigen Schenkel 6 des Dichtelements 5 radial nach außen ab. Die Anlagefläche 9 des Elastomerkörpers 8, gegen die sich der mantelförmige Schenkel 6 des Dichtelements 5 abstützt, ist zum Innenraum des durch den Zylinder 1 gebildeten Behälters hin sich verjüngend konisch ausgebildet. Entsprechend konisch ausgebildet ist die Anlagefläche des mantelförmigen Schenkels 6.

Das Dichtelement 5 weist zur Kolbenstange hin an diese anliegend wenigstens eine Dichtkante 10 auf. Weitere Dichtkanten 11, 12 kommen gleichzeitig oder nacheinander gegenüber der Kolbenstange zur Anlage.

Der Elastomerkörper 8 stützt sich radial in einer Ausnehmung 13 ab, in die er unter radialer Vorspannung eingebracht ist. Die radiale Abstützung des Dichtelements 5 erfolgt dagegen durch die Anlage über die Anlagefläche 9 des Elastomerkörpers 8.

Eine in eine Nut 14 eingesetzte Anpressscheibe 15 dient zum radialen Halten von Dichtelement 5 und Elastomerkörper 8.

Fig. 2 zeigt einen Querschnitt durch den Elastomerkörper 8 vor dem Einbau in die Ausnehmung 13. Der nicht eingebaute Elastomerkörper 8 weist eine über den größeren Teil der axialen Höhe 16 konische äußere Mantelfläche 17 auf. Durch das Einpressen des Elastomerkörpers 8 in die völlig oder annähernd zylindrische Ausnehmung 13 des Dichtungsträgers 2 wird erreicht, dass die radiale Vorspannung, die sich als innere Spannung bis zum Innendurchmesser fortsetzt, über die axiale Höhe 16 des Elastomerkörpers 8 zum Innenraum des durch den Zylinder 1 gebildeten Behälters hin erhöht. Durch diese Maßnahme wird erreicht, dass das Dichtelement 5 auch bei tiefen Temperaturen von Minus 40° noch ausreichend abgestützt wird, ohne dass Öllecks zwischen Kolbenstange und Behälter entstehen. Selbstverständlich sind auf fachmännische Weise die geeigneten Kunststoffe bzw. Elastomere auszuwählen.

### Bezugszeichenliste

- 1.: Zylinder
- 2.: Dichtungsring
- 3.: Sprengring
- 4.: Dichtung
- 5.: Dichtelement
- 6.: Schenkel
- 7.: Schenkel
- 8.: Elastomerkörper
- 9.: Anlagefläche
- 10.: Dichtkante
- 11.: Dichtkante
- 12.: Dichtkante
- 13.: Ausnehmung
- 14.: Nut
- 15.: Anpressscheibe
- 16.: Höhe
- 17.: Mantelfläche

## Patentansprüche

1. Dichtung zum hydraulischen Abdichten einer axial oszillierend in einen Behälter, vorzugsweise einen hydraulischen Stoßdämpfer, eintauchenden Kolbenstange mit einem, vorzugsweise aus elastischem Kunststoff bestehenden Dichtelement (5), das mit einer oder mehreren an der Kolbenstange anliegenden Dichtkanten (10, 11, 12) ausgebildet ist, über einen Elastomerkörper (8) verspannt wird und mit Letzterem in einem Dichtungsträger (2) radial und axial gehalten wird, bei der das Dichtelement (5) einen L-förmigen Querschnitt mit einem ringförmigen Schenkel (7) und einem mantelförmig die Kolbenstange umgebenden Schenkel (6) aufweist und bei der der ringförmig ausgebildete Elastomerkörper (8) den die Kolbenstange umgebenden Schenkel (6) des Dichtelements (5) über eine sich konisch zum Innenraum des Behälters verjüngende Anlagefläche (9) radial abstützt und bei der der äußere Mantel des Elastomerkörpers (8) unter radialer Vorspannung in einer Ausnehmung (13) des Dichtungsträgers (2) liegt, **dadurch gekennzeichnet, dass** die radiale Vorspannung über die axiale Höhe (16) des Elastomerkörpers (8) unterschiedlich ist.

2. Dichtung nach Anspruch 1, **dadurch gekennzeichnet, dass** sich die radiale Vorspannung des Dichtelements in Richtung des Endes des die Kolbenstange umgebenden Schenkels (6) erhöht.

3. Dichtung nach Anspruch 1 oder Anspruch 2, **dadurch gekennzeichnet, dass** sich die radiale Vorspannung kontinuierlich erhöht.

4. Dichtung nach einem oder mehreren der Ansprüche 1 bis 3, **dadurch gekennzeichnet, dass** die äußere Mantelfläche (17) des Elastomerkörpers (8) vor dem Einbau in den Dichtungsträger (2) eine konische Form aufweist und die Anlagefläche des Dichtungsträgers (2) völlig oder annähernd zylindrisch ausgebildet ist und einen Durchmesser aufweist, der gleich oder geringfügig kleiner ist als der kleinere Durchmesser der Mantelfläche (17) des Elastomerkörpers (8) vor dem Einbau.
